# FASCICULE DE BREVET EUROPEEN

(11) **EP 2 662 539 B1**
(45) Date de publication et mention de la délivrance du brevet: **30.12.2015**
(21) Numéro de dépôt: 13165821.3
(22) Date de dépôt: 29.04.2013
(51) Int. Cl.: F01K 13/00

(54) **Lubrification d'une turbine dans un cycle de rankine**
Schmierung einer Turbine in einem Rankine-Zyklus
Lubrication of a turbine in a Rankine cycle

(30) Priorité: 10.05.2012 FR 1201360
(43) Date de publication de la demande: 13.11.2013
(73) Titulaire: Eneftech Innovation SA, 1260 Nyon (CH)
(72) Inventeur: Kane, Malick, 1066 Epalinges (CH); Cretegny, Danilo, 1020 Renens (CH)
(74) Mandataire: Vigand, Philippe

(56) Documents cités:
- AU-A1- 2011 201 221
- US-A- 5 027 601
- US-A1- 2010 034 684
- US-A1- 2010 254 835

## Description

La présente invention concerne de manière générale la lubrification d'une turbine dans un cycle de Rankine, et en particulier la lubrification d'une turbine à spirale, de type "scroll".

Il est connu dans l'art antérieur des installations de récupération d'énergie ou de cogénération mettant en oeuvre un cycle de Rankine où la détente est assurée par une turbine à spirale de type scroll, comme celle décrite dans le document EP1421259. En contrepartie, ce système présente notamment l'inconvénient de nécessiter une pompe de lubrification spécifique pour lubrifier la spirale mobile qui coopère avec la spirale fixe pour assurer la détente du fluide de travail organique. Il en résulte une consommation énergétique accrue pour alimenter cette pompe spécifique de lubrification.

Il est à noter également que ces turbines rotatives présentent un axe de rotation monté sur des paliers qui requièrent également une lubrification, avec une huile de bonne qualité. Une partie de cette huile utilisée pour lubrifier les paliers peut se retrouver mixée au fluide de travail, et il faut alors intégrer un séparateur d'huile dans le cycle pour supprimer l'huile, afin de préserver le rendement des échanges thermiques et ne pas réduire les échanges thermiques qui seraient limités par une couche isolante d'huile dans les parties de travail de la turbine et de toutes les surfaces d'échange (évaporateur, condenseur). Le document US20070175212A1 donne un exemple d'une telle installation où la séparation de l'huile est effectuée dans l'unité de détente. Cependant, l'huile récupérée au niveau du carter ne convient pas forcément pour lubrifier à nouveau les paliers, car du fluide de travail organique peut rester contenu dans l'huile qui présente alors une viscosité inappropriée et les paliers seraient alors incorrectement lubrifiés avec une telle huile. Ce problème est encore amplifié si l'installation présente un régime bi-phasique en fin de détente pour des raisons de fonctionnement dans une grande plage de fonctionnement, car la partie liquide du fluide de travail sera emportée avec l'huile liquide pour aller dans le carter. La viscosité de ce mélange liquide fluide de travail - huile est incompatible avec une bonne lubrification des paliers.

Le document US2010/034684 A1 décrit une installation comprenant une turbine à vis utilisée dans un cycle de Rankine.

Enfin, le document JP58032908A présente une installation fonctionnant suivant un cycle de Rankine avec un séparateur d'huile juste avant l'entrée de la turbine. Toute l'huile est séparée du fluide de travail pour être ensuite redirigée vers l'unité de détente afin d'en lubrifier les organes internes. Ce système de lubrification est risqué car du fluide de travail organique peut rester mélangé avec l'huile à haute pression qui sera alors de mauvaise qualité pour lubrifier les paliers. Des grippages peuvent intervenir dans l'unité de détente.

Un but de la présente invention est de répondre aux inconvénients des documents de l'art antérieur mentionnés ci-dessus et en particulier, tout d'abord, de proposer une installation mettant en oeuvre un cycle de Rankine dans laquelle la spirale de la turbine et les paliers sont chacun lubrifiés correctement avec de l'huile de bonne qualité même si un écoulement bi-phasique en fin de détente a lieu.

Pour cela un premier aspect de l'invention concerne une installation de récupération d'énergie ou de cogénération comprenant une turbine et mettant en oeuvre un cycle de Rankine avec une détente d'un fluide de travail organique assurée par le passage du fluide de travail au travers de la turbine, cette dernière comprenant des paliers lubrifiés par de l'huile prélevée dans un carter d'huile, l'huile de lubrification des paliers étant entraînée au moins partiellement par le fluide de travail après sa détente au travers de la turbine, l'installation comprenant, en amont de l'entrée de la turbine, des moyens de séparation de l'huile contenue dans le fluide de travail agencés pour renvoyer l'huile vers le carter d'huile, **caractérisée en ce que** la turbine est une turbine à spirales et en ce que les moyens de séparation sont agencés pour laisser passer dans le fluide de travail en entrée de la turbine un taux d'huile compris dans une plage de valeurs prédéterminée, afin de lubrifier les spirales. L'installation selon l'invention permet d'augmenter l'efficacité de récupération d'énergie ou de cogénération en ne consommant aucune énergie pour lubrifier spécifiquement les spirales de la turbine, car le séparateur d'huile laisse passer une quantité d'huile en entrée de turbine pour la lubrifier (valeur minimum de la plage de valeurs), sans pour autant perturber les échanges thermiques lors de la détente car la valeur haute de la plage de valeur garantit qu'il n'y aura pas d'huile en excès dans la turbine qui pourrait former un film d'huile isolant tel que les échanges thermiques en seraient réduits. L'installation selon la présente invention ne nécessite pas de pompe de lubrification spécifique des spirales. Le séparateur d'huile selon la présente invention est modifié par rapport à un séparateur d'huile standard qui retire toute l'huile du fluide de travail, pour laisser passer une quantité prédéterminée d'huile dans le fluide de travail afin de lubrifier les spirales.

De manière avantageuse, l'installation comprend une pompe de pressurisation du fluide de travail et les moyens de séparation sont agencés entre la pompe de pressurisation et la turbine, l'installation comprenant des moyens de traitement couplés aux moyens de séparation d'huile, les moyens de traitement sont agencés pour imposer une chute de pression à l'huile récupérée dans le fluide de travail, de sorte à évaporer le fluide de travail resté dans l'huile pour maintenir la viscosité de l'huile dans une plage de valeur de viscosité prédéterminée. Cette mise en oeuvre de l'invention tire parti du cycle de Rankine en agençant le séparateur dans la partie haute pression de l'installation. Tout d'abord, le séparateur est plus compact que s'il était agencé dans la partie basse pression de l'installation et surtout, on peut imposer sans consommation énergétique une chute de pression à l'huile récupérée, de sorte à évaporer le fluide de travail qui resterait mélangé avec l'huile. Cette évaporation permet de purifier l'huile qui peut alors être réutilisée pour lubrifier les paliers car sa viscosité n'est plus affectée par la présence de fluide de travail organique. Il est important de noter que même dans le cas où un écoulement bi-phasique en fin de détente a lieu, l'huile récupérée par le séparateur d'huile dans ce cas aura une viscosité correcte pour lubrifier les paliers.

Avantageusement, les moyens de traitement comprennent une vanne à pression différentielle pour imposer la chute de pression à l'huile. Une telle vanne à pression différentielle assure une chute de pression fiable.

Avantageusement, l'installation comprend une vanne de décharge entre les moyens de séparation et les moyens de traitement pour réguler le débit d'huile. La récupération d'huile est régulée par la vanne de décharge.

En alternative de ce premier mode de réalisation, l'installation comprend un condenseur et les moyens de séparation sont agencés entre la sortie de la turbine et le condenseur.

Une réalisation particulièrement intéressante consiste en ce que la plage de valeurs prédéterminée de taux d'huile va de 2% à 6% d'huile par unité de masse. La demanderesse s'est aperçue que ces valeurs permettaient de garantir une lubrification de la spirale de la turbine, tout en évitant d'avoir un film d'huile liquide sur les surfaces d'échange préjudiciable aux échanges thermiques. Idéalement, la plage de valeurs prédéterminée de taux d'huile va de 2% à 4% d'huile par unité de masse de fluide de travail liquide. Les spirales sont alors bien lubrifiées et la température du fluide de travail en sortie de turbine est assez basse pour offrir un bon rendement à l'installation.

Avantageusement, les moyens de séparation comprennent des moyens de chauffage qui opèrent une évaporation du fluide organique contenu dans l'huile récupérée par chauffage de l'huile. Une purification par chauffage permet de supprimer le fluide de travail de l'huile en l'évaporant, de sorte à garantir une viscosité correcte de l'huile.

Avantageusement, les moyens de séparation comprennent un échangeur de chaleur agencé pour maintenir la température de l'huile dans une plage de température prédéterminée. L'huile est refroidie avant d'être envoyée lubrifier les paliers.

Avantageusement, la plage de température va de 50 °C à 90 °C.

Avantageusement, l'échangeur de chaleur est agencé sur le circuit principal en aval de la pompe P pour opérer un préchauffage du fluide de travail lors du maintien de la température de l'huile dans la plage de température prédéterminée.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une installation de récupération d'énergie, ou de cogénération, selon la présente invention ;
- la figure 2 représente une première variante du système décrit à la figure 1 ;
- la figure 3 représente une deuxième variante du système décrit à la figure 1.

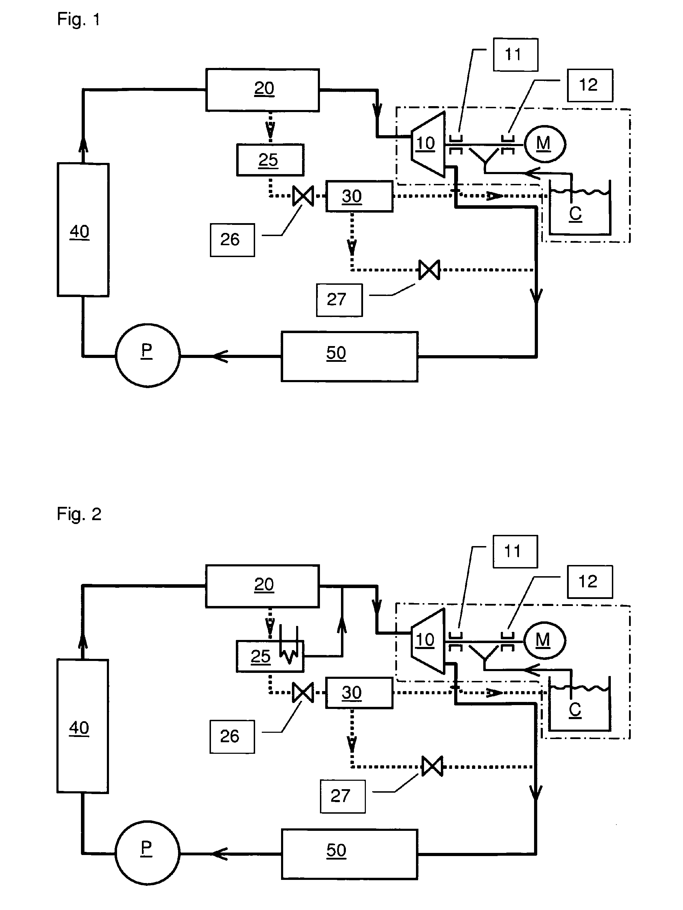

La figure 1 représente une installation de récupération d'énergie ou de cogénération mettant en oeuvre un cycle de Rankine en faisant circuler dans le sens des flèches du schéma un fluide travail organique le long d'un circuit principal composé d'un condenseur 50, d'une pompe de pressurisation P, d'un évaporateur 40 et d'une turbine 10. La partie entre la pompe P et la turbine 10 constitue la partie haute pression de l'installation et la chaleur récupérée par l'évaporateur fait passer le fluide de travail d'un état liquide à un état gazeux. Cette vapeur est ensuite détendue dans la turbine 10 afin de faire tourner un générateur de courant M, qui transforme donc l'énergie thermique récupérée par l'évaporateur en énergie électrique. La turbine 10 est une turbine à spirale et comporte un axe de rotation monté sur des paliers 11 et 12. Ces paliers 11 et 12 sont lubrifiés par de l'huile prélevée dans un carter C de la turbine 10 comme l'indique la flèche sur la figure. Après avoir lubrifié les paliers 11 et 12, une partie de l'huile est entraînée par le fluide de travail dans le circuit principal. Ce mélange huile-fluide de travail organique passe donc dans le condenseur 50, la pompe de pressurisation P et l'évaporateur 40. Un tel mélange huile-fluide de travail organique est néfaste au rendement lors du passage dans la turbine 10, dans le condenseur 50 et dans l'évaporateur 40, car un film d'huile va recouvrir les conduits internes de ces éléments et limiter les échanges thermiques, ce qui grève le rendement total de la détente. Afin de supprimer cet inconvénient, un séparateur d'huile 20 est inséré dans le circuit principal avant la turbine 10. Cependant, pour éviter de devoir injecter de l'huile à haute pression en entrée de turbine 10 pour lubrifier la spirale de la turbine 10, le séparateur d'huile 20 est agencé pour laisser passer en entrée de turbine 10 un mélange huile-fluide de travail organique avec un taux d'huile par unité de masse de fluide de travail dans une plage de valeurs prédéterminées. Ainsi, la spirale 10 est correctement lubrifiée, sans que le rendement de la détente ne soit affecté avec un taux d'huile compris dans une plage de 1% à 5% d'huile en masse. L'huile récupérée par le séparateur d'huile 20 est ensuite stockée dans un réservoir intermédiaire 25 sous pression et une vanne 26 permet une décharge de l'huile sous pression vers un réservoir basse pression 30 dans lequel le fluide de travail contenu dans l'huile récupérée s'évapore, sous l'effet de la chute de pression. L'huile purifiée est ensuite conduite vers le carter d'huile C, car sa viscosité est maintenant compatible avec la lubrification des paliers. Le fluide de travail organique qui vient de s'évaporer depuis l'huile dans le réservoir 30 est redirigé vers la partie basse pression du circuit principal comme le montre le schéma, éventuellement par l'intermédiaire d'une vanne 27 à pression différentielle. Pour parfaire la qualité de l'huile récupérée, le réservoir 30 peut comporter un circuit de chauffage pour retirer par évaporation tout le fluide de travail contenu dans l'huile, et ensuite un échangeur de refroidissement de l'huile pour limiter sa température et garantir que la viscosité sera dans une plage de valeur prédéterminée compatible avec la lubrification des paliers 11 et 12 de la turbine 10. Avantageusement, cet échangeur prélève l'huile entre le réservoir 30 et le carter C et est agencé sur le circuit principal, en aval de la pompe P pour préchauffer le fluide de travail, afin de récupérer la chaleur de l'huile. On peut envisager également d'agencer l'échangeur pour qu'il prélève directement l'huile du carter et la refroidisse avant de l'y réinjecter.

La figure 2 représente une première variante de l'invention décrite ci-dessus. Afin de limiter le passage de fluide de travail organique dans la partie basse pression du cycle en même temps que l'huile au travers de la vanne 26, une résistance de chauffage est installée dans le réservoir intermédiaire 25. On peut alors y opérer une chauffe de l'huile afin d'évaporer le fluide de travail qui s'y trouve dissout afin de le renvoyer dans la partie haute pression du circuit principal en entrée de turbine 10, comme représenté par la flèche. On force ainsi un maximum de fluide de travail à passer dans la turbine 10, pour obtenir un bon rendement du cycle total. L'huile passe de son côté dans la partie basse pression pour aller au carter C, provoquant l'évaporation du reste du fluide de travail qui est redirigé vers la partie basse pression du cycle.

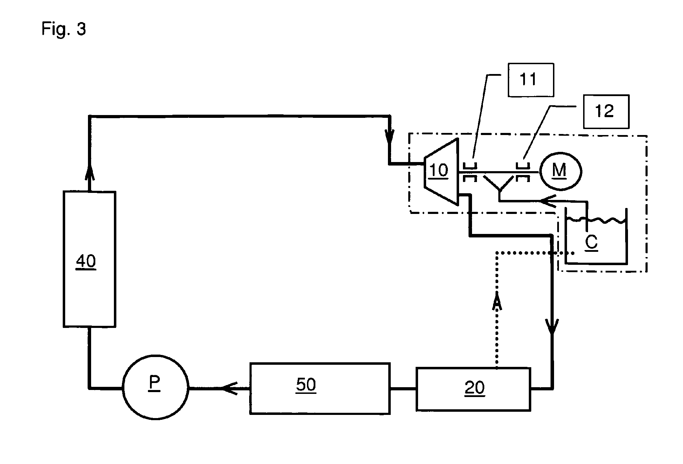

La figure 3 représente une deuxième variante du cycle représenté à la figure 1. Le déshuileur 20 est situé après la turbine afin de séparer l'huile mélangée au fluide de travail organique, tout en laissant passer une quantité prédéterminée d'huile avec le fluide de travail, pour lubrifier la turbine 10. En effet, le fluide de travail en sortie du déshuileur contenant une quantité d'huile nécessaire à la lubrification va suivre le circuit en passant par le condenseur 50, la pompe P, l'évaporateur 40 et entrer dans la turbine 10, toujours avec la quantité d'huile nécessaire pour la lubrifier. D'un autre côté, l'huile séparée est renvoyée au carter C, tel que cela est représenté en traits pointillés.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, on pourra envisager d'adapter la plage de température de l'huile en fonction du type de fluide de travail utilisé et du grade de l'huile choisie.

## Revendications

1. Installation de récupération d'énergie ou de cogénération comprenant une turbine (10) et mettant en oeuvre un cycle de Rankine avec une détente d'un fluide de travail organique assurée par le passage du fluide de travail au travers de la turbine (10), cette dernière comprenant des paliers (11, 12) lubrifiés par de l'huile prélevée dans un carter d'huile (C), l'huile de lubrification des paliers (11, 12) étant entraînée au moins partiellement par le fluide de travail après sa détente au travers de la turbine (10), l'installation comprenant, en amont de l'entrée de la turbine (10), des moyens de séparation de l'huile (20) contenue dans le fluide de travail agencés pour renvoyer l'huile vers le carter d'huile (C), **caractérisée en ce que** la turbine (10) est une turbine (10) à spirales et **en ce que** les moyens de séparation (20) sont agencés pour laisser passer dans le fluide de travail en entrée de la turbine (10) un taux d'huile compris dans une plage de valeurs prédéterminée, afin de lubrifier les spirales.

2. Installation selon la revendication 1, comprenant une pompe de pressurisation (P) du fluide de travail et dans laquelle les moyens de séparation (20) sont agencés entre la pompe de pressurisation (P) et la turbine (10), l'installation comprenant des moyens de traitement (30) couplés aux moyens de séparation (20) d'huile, **caractérisée en ce que** les moyens de traitement (30) sont agencés pour imposer une chute de pression à l'huile récupérée dans le fluide de travail, de sorte à évaporer le fluide de travail resté dans l'huile pour maintenir la viscosité de l'huile dans une plage de valeur de viscosité prédéterminée.

3. Installation selon la revendication 2 dans laquelle les moyens de traitement (30) comprennent une vanne à pression différentielle (27) pour imposer la chute de pression à l'huile.

4. Installation selon l'une des revendications 2 ou 3, comprenant une vanne de décharge (26) entre les moyens de séparation (20) et les moyens de traitement (30) pour réguler le débit d'huile.

5. Installation selon la revendication 1, comprenant un condenseur (50) et dans laquelle les moyens de séparation (20) sont agencés entre la sortie de la turbine (10) et le condenseur (50).

6. Installation selon l'une des revendications 1 à 5, dans laquelle la plage de valeurs prédéterminée de taux d'huile va de 2% à 6% d'huile en masse.

7. Installation selon l'une des revendications 1 à 6, dans laquelle les moyens de séparation (20) comprennent des moyens de chauffage qui opèrent une évaporation du fluide organique contenu dans l'huile récupérée par chauffage de l'huile.

8. Installation selon l'une des revendications 1 à 7 dans laquelle les moyens de séparation comprennent un échangeur de chaleur agencé pour maintenir la température de l'huile dans une plage de température prédéterminée.

9. Installation selon la revendication 8 dans laquelle la plage de température va de 50°C à 90°C.

10. Installation selon l'une des revendications 8 ou 9 dans laquelle l'échangeur de chaleur est agencé sur le circuit principal en aval de la pompe (P) pour opérer un préchauffage du fluide de travail lors du maintien de la température de l'huile dans la plage de température prédéterminée.

## Patentansprüche

1. Installation zur Energierückgewinnung oder zur Kogeneration, umfassend eine Turbine (10) und durchführend einen Rankine-Zyklus mit einer Ausdehnung eines organischen Arbeitsfluids, sichergestellt mittels des Durchgangs des Arbeitsfluids durch die Turbine (10), wobei letztere von aus einer Ölwanne (C) entnommenem Öl geschmierte Lager (11, 12) umfasst, wobei das Öl zur Schmierung der Lager (11, 12) zumindest teilweise durch das Arbeitsfluid mitgenommen wird nach dessen Ausdehnung über die Turbine (10), wobei die Installation vorgeschaltet dem Einlass der Turbine (10) Mittel zum Abtrennen (20) des in dem Arbeitsfluid enthaltenen Öls umfasst, ausgebildet um das Öl zur Ölwanne (C) zurückzuführen, **dadurch gekennzeichnet, dass** die Turbine (10) eine Spiralturbine (10) ist und dass die Mittel zum Abtrennen (20) ausgebildet sind, um am Einlass der Turbine (10) eine innerhalb eines vorbestimmten Wertebereichs liegende Ölrate in das Arbeitsfluid durchzulassen, zwecks Schmierung der Spiralen.

2. Installation nach Anspruch 1, umfassend eine Pumpe (P) zum unter Druck setzen des Arbeitsfluids, und wobei die Mittel zum Abtrennen (20) zwischen der Pumpe (P) und der Turbine (10) angeordnet sind, wobei die Installation Bearbeitungsmittel (30) umfasst, welche mit den Mitteln zum Abtrennen (20) des Öls gekoppelt sind, **dadurch gekennzeichnet, dass** die Bearbeitungsmittel (30) ausgebildet sind, um dem aus dem Arbeitsfluid zurückgewonnen Öl einen Druckabfall aufzuerlegen, derart, dass das im Öl verbliebene Arbeitsfluid verdampft wird, um die Viskosität des Öls in einem vorbestimmten Viskositäts-Wertebereichs zu halten.

3. Installation nach Anspruch 2, in welcher die Bearbeitungsmittel (30) ein Differenzdruckventil (27) umfassen, um dem Öl den Druckabfall aufzuerlegen.

4. Installation nach einem der Ansprüche 2 oder 3, umfassend ein Entlastungsventil (26) zwischen den Mitteln zum Abtrennen (20) und den Bearbeitungsmitteln (30) zum Regulieren des Öldurchflusses.

5. Installation nach Anspruch 1, umfassend einen Kondensator (50), und in welcher die Mittel zum Abtrennen (20) zwischen dem Auslass der Turbine (10) und dem Kondensator (50) angeordnet sind.

6. Installation nach einem der Ansprüche 1 bis 5, wobei sich der vorbestimmte Wertebereich der Ölrate von 2 bis 6 Masse-% Öl erstreckt.

7. Installation nach einem der Ansprüche 1 bis 6, in welcher die Mittel zum Abtrennen (20) Heizmittel umfassen, welche mittels Erhitzen des Öls ein Verdampfen des in dem zurückgewonnen Öl enthaltenen organischen Fluids bewerkstelligen.

8. Installation nach einem der Ansprüche 1 bis 7, in welcher die Mittel zum Abtrennen einen Wärmetauscher umfassen, welcher ausgebildet ist, um die Öltemperatur innerhalb eines vorbestimmten Temperaturbereichs zu halten.

9. Installation nach Anspruch 8, wobei sich der Temperaturbereich von 50 ° C bis 90 ° C erstreckt.

10. Installation nach einem der Ansprüche 8 oder 9, in welcher der Wärmetauscher im Hauptkreislauf stromabwärts der Pumpe (P) angeordnet ist, um eine Vorwärmung des Arbeitsfluids zu bewerkstelligen, beim Halten der Öltemperatur in dem vorgegebenen Temperaturbereich.

## Claims

1. Energy recovery or cogeneration plant comprising a turbine (10) and implementing a Rankine cycle with an expansion of an organic working fluid provided by the passage of the working fluid through the turbine (10), the latter comprising bearings (11, 12) lubricated by the oil taken from an oil sump (C), the lubricating oil of the bearings (11, 12) being driven at least partly by the working fluid after its expansion through the turbine (10), the installation comprising, upstream of the inlet of the turbine (10), means for separating the oil (20) contained in the working fluid arranged to return the oil to the oil sump (C), **characterized in that** the turbine (10) is a spiral turbine (10) and **in that** the separating means (20) are arranged to let an oil rate within a predetermined range of values pass in the working fluid in the turbine inlet (10), in order to lubricate the spirals.

2. Installation according to claim 1, comprising a pressurizing pump (P) of the working fluid and wherein the separating means (20) are arranged between the pressurizing pump (P) and the turbine (10), the installation comprising processing means (30) coupled to the oil separating means (20), **characterized in that** the processing means (30) are arranged to impose a pressure drop in the oil recovered from the working fluid, so as to evaporate the working fluid remaining in the oil to maintain the viscosity of the oil within a predetermined viscosity range of values.

3. Installation according to claim 2 wherein the processing means (30) comprise a differential pressure valve (27) to impose the pressure drop in the oil.

4. Installation according to one of claims 2 or 3, comprising a discharge valve (26) between the separation means (20) and the processing means (30) for regulating the oil flow.

5. Installation according to Claim 1, comprising a condenser (50) and wherein the separation means (20) are arranged between the outlet of the turbine (10) and the condenser (50).

6. Installation according to one of claims 1 to 5, wherein the predetermined range of values of oil rate ranges from 2% to 6% by weight oil.

7. Installation according to one of claims 1 to 6, wherein the separating means (20) comprise heating means which operate by evaporation of the organic fluid contained in the recovered oil by heating the oil.

8. Installation according to one of claims 1 to 7 wherein the separation means comprise a heat exchanger arranged to maintain the oil temperature within a predetermined temperature range.

9. Installation according to claim 8 wherein the temperature range is from 50 ° C to 90 ° C.

10. Installation according to one of claims 8 or 9 wherein the heat exchanger is arranged in the main circuit downstream of the pump (P) to effect a preheating of the working fluid when the oil temperature is maintained within the predetermined temperature range.
